(19) Europäisches Patentamt / European Patent Office / Office européen des brevets

(11) **EP 4 615 065 A1**

(12) **EUROPEAN PATENT APPLICATION**
published in accordance with Art. 153(4) EPC

(43) Date of publication:
**10.09.2025 Bulletin 2025/37**

(21) Application number: **23886162.9**

(22) Date of filing: **30.10.2023**

(51) International Patent Classification (IPC):
*H04W 52/02* (2009.01)      *H04W 24/08* (2009.01)
*H04W 76/28* (2018.01)

(52) Cooperative Patent Classification (CPC):
**H04W 24/08; H04W 52/02; H04W 76/28;**
**Y02D 30/70**

(86) International application number:
**PCT/KR2023/016958**

(87) International publication number:
**WO 2024/096466 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2022 US 202263422928 P**

(71) Applicant: **LG Electronics Inc.**
**Yeongdeungpo-gu**
**Seoul 07336 (KR)**

(72) Inventors:
- **LEE, Sunghoon**
  **Seoul 06772 (KR)**
- **KIM, Jaehyung**
  **Seoul 06772 (KR)**
- **CHOI, Seunghwan**
  **Seoul 06772 (KR)**
- **KIM, Seonwook**
  **Seoul 06772 (KR)**
- **HWANG, Seunggye**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR WIRELESS SIGNAL TRANSMISSION OR RECEPTION IN WIRELESS COMMUNICATION SYSTEM**

(57)      A method for receiving a signal by a terminal in a wireless communication system according to an example of the present disclosure may comprise the steps of: receiving, from a network, a discontinuous reception (DRX) configuration including information on a first DRX cycle for low power-wake up radio (LP-WUR) of the terminal; performing radio resource management (RRM) measurement through the LP-WUR on the basis of the first DRX cycle in a first mode in which main radio (MR) of the terminal is deactivated; and determining, on the basis of a result of the RRM measurement, whether to switch to a second mode in which the MR is activated, wherein the first DRX cycle for the LP-WUR is configured to be different from a second DRX cycle for the MR, and the terminal determines to switch to the second mode on the basis that the number of failures of the RRM measurement through the LP-WUR exceeds a threshold value in the first mode.

**FIG. 15**

Receive DRX configuration — C05

Perform RRM measurement through LP-WUR — C10

Determine whether to switch to mode where MR is activated — C15

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method and apparatus for efficiently performing a wireless signal transmission/reception procedure.
Other technical objects may be derived from embodiments disclosed in the detailed description.

**TECHNICAL SOLUTION**

In an aspect of the present disclosure, provided herein is a method of receiving a signal by a user equipment (UE) in a wireless communication system. The method includes: receiving, from a network, a discontinuous reception (DRX) configuration including information about a first DRX cycle for a low-power wake-up radio (LP-WUR) of the UE; performing radio resource management (RRM) measurement through the LP-WUR based on the first DRX cycle in a first mode in which a main radio (MR) of the UE is deactivated; and determining, based on results of the RRM measurement, whether to switch to a second mode in which the MR is activated. The first DRX cycle for the LP-WUR may be configured differently from a second DRX cycle for the MR. The UE may determine to switch to the second mode based on that a number of failures of the RRM measurement through the LP-WUR in the first mode exceeds a threshold.
The first DRX cycle may be smaller than the second DRX cycle.
A first RRM measurement period for the LP-WUR in the first mode may be determined based on the first DRX cycle, and a second RRM measurement period for the MR in the second mode may be determined based on the second DRX cycle. The first RRM measurement period may be smaller than the second RRM measurement period.
The first mode may be maintained until the number of the failures of the RRM measurement reaches the threshold.
The MR may be turned off or enter a sleep state in the first mode.
Based on that the number of the failures of the RRM measurement exceeds the threshold, the UE may switch to the second mode before a timing in whcih a signal for the RRM measurement of the MR is provided.
After switching to the second mode, the RRM measurement of the MR may be performed at integer multiples of the second DRX cycle.
The RRM measurement may be performed based on an LP-WUR synchronization signal or an LP-WUR reference signal provided for the LP-WUR.
The MR may be related to orthogonal frequency division multiple access (OFDMA) in 3rd Generation Partnership Project New Radio (3GPP-NR).
In another aspect of the present disclosure, provided herein is a computer-readable recording medium having recorded thereon a program for the above-described signal reception method.
In another aspect of the present disclosure, provided herein is a UE configured to perform the above-described signal reception method. The UE may include a first receiver for the MR; and a second receiver for the LP-WUR.
In another aspect of the present disclosure, provided herein is a device configured to control the UE performing the above-described signal reception method.
In another aspect of the present disclosure, provided herein is a method of transmitting a signal by a base station (BS) in a wireless communication system. The method includes: transmitting a first discontinuous reception (DRX) configuration including information about a first DRX cycle for a low-power wake-up radio (LP-WUR) of a user equipment (UE) and a second DRX configuration including information about a second DRX cycle for a main radio

(MR) of the UE; transmitting a first signal related to first RRM measurement to the LP-WUR of the UE in a first mode in which the MR of the UE is deactivated; and transmitting a second signal related to second RRM measurement to the MR of the UE in a second mode in which the MR of the UE is activated. The first DRX cycle for the LP-WUR may be related to the first RRM measurement, and the second DRX cycle for the MR may be related to the second RRM measurement. The first DRX cycle may be set to be smaller than the second DRX cycle.

In a further aspect of the present disclosure, provided herein is a BS configured to perform the above-described signal transmission method.

## ADVANTAGEOUS EFFECTS

According to an embodiment, a signal may be transmitted/received more accurately and more efficiently in a wireless communication system.

Other technical effects may be derived from embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink control channel (PDCCH) transmission and reception process.
FIG. 6 illustrates an exemplary physical downlink shared channel (PDSCH) reception and acknowledgement/negative acknowledgement (ACK/NACK) transmission process.
FIG. 7 illustrates an exemplary physical uplink shared channel (PUSCH) transmission process.
FIGS. 8 to 10 are diagrams illustrating a discontinuous reception (DRX) related operation.
FIG. 11 is a diagram illustrating a wake-up signal (WUS).
FIG. 12 is a diagram for explaining a low-power wake-up receiver (LP-WUR, simply LR) DRX configuration and LR RRM measurement according to an embodiment.
FIG. 13 is a diagram for explaining a main radio (MR) wake-up trigger according to an embodiment.
FIG. 14 is a diagram for explaining LR RRM measurement and an MR wake-up trigger according to an embodiment.
FIG. 15 is a diagram for explaining a signal reception method for a user equipment (UE) according to an embodiment.
FIG. 16 is a diagram for explaining a signal transmission method for a base station (BS) according to an embodiment.
FIGS. 17 to 20 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information

- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

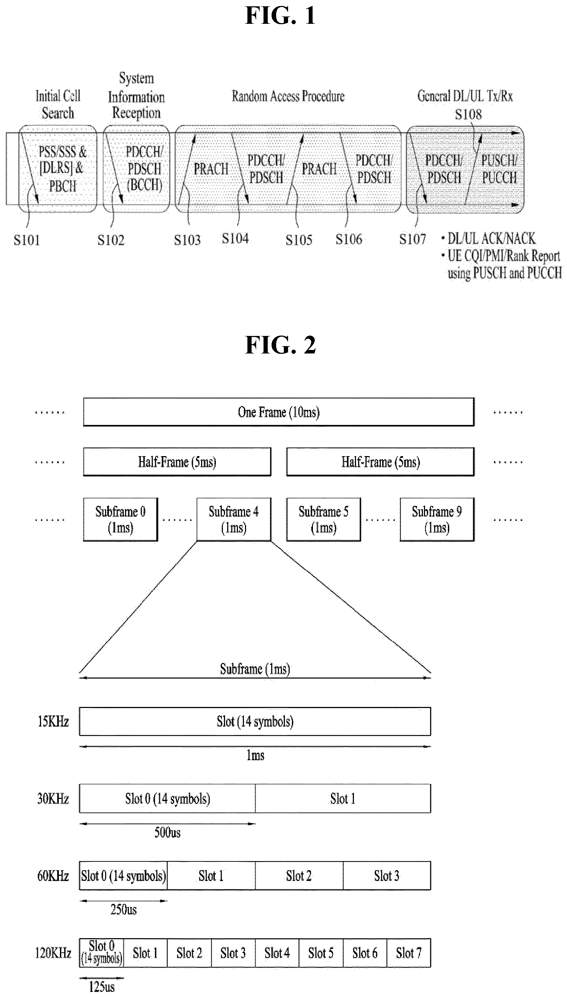

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |

(continued)

| SCS (15*2$^u$) | N$^{slot}_{symb}$ | N$^{frame,u}_{slot}$ | N$^{subframe,u}_{slot}$ |
|---|---|---|---|
| 120KHz (u=3) | 14 | 80 | 8 |
| 240KHz (u=4) | 14 | 160 | 16 |
| * N$^{slot}_{symb}$: Number of symbols in a slot<br>* N$^{frame,u}_{slot}$: Number of slots in a frame<br>* N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

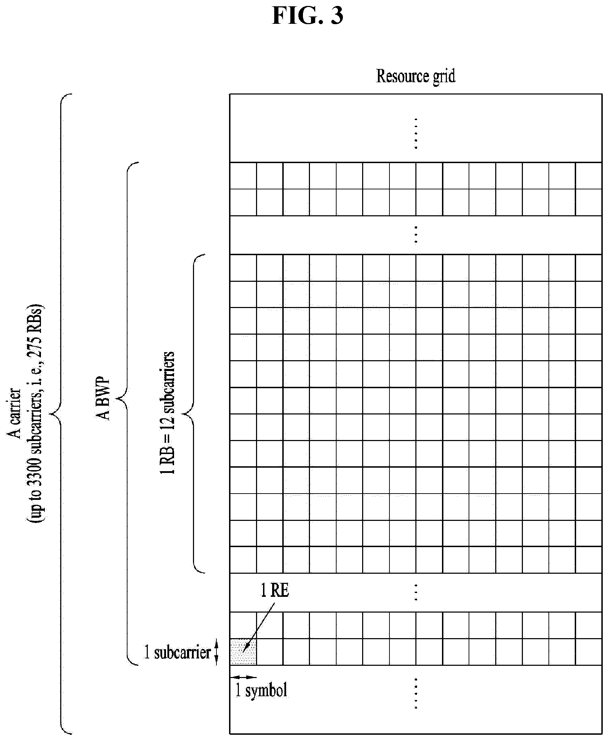

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

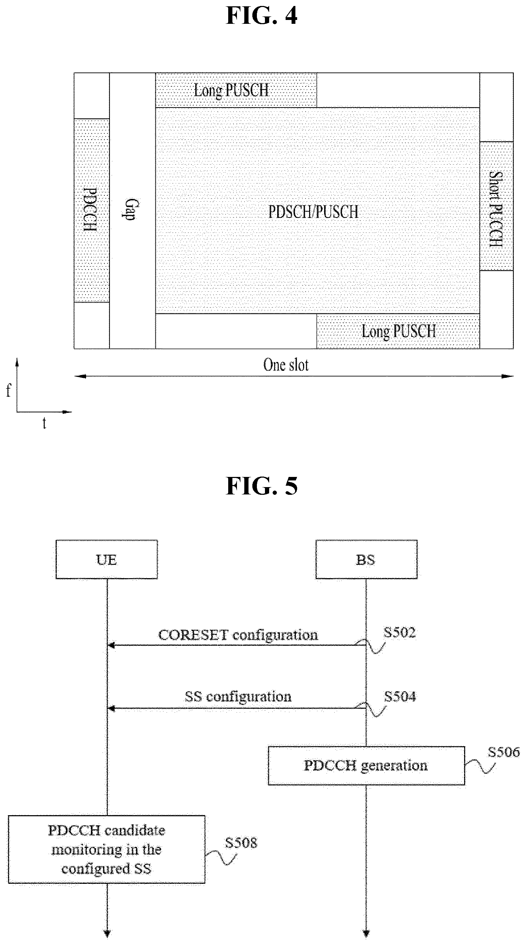

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicity AndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.

- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

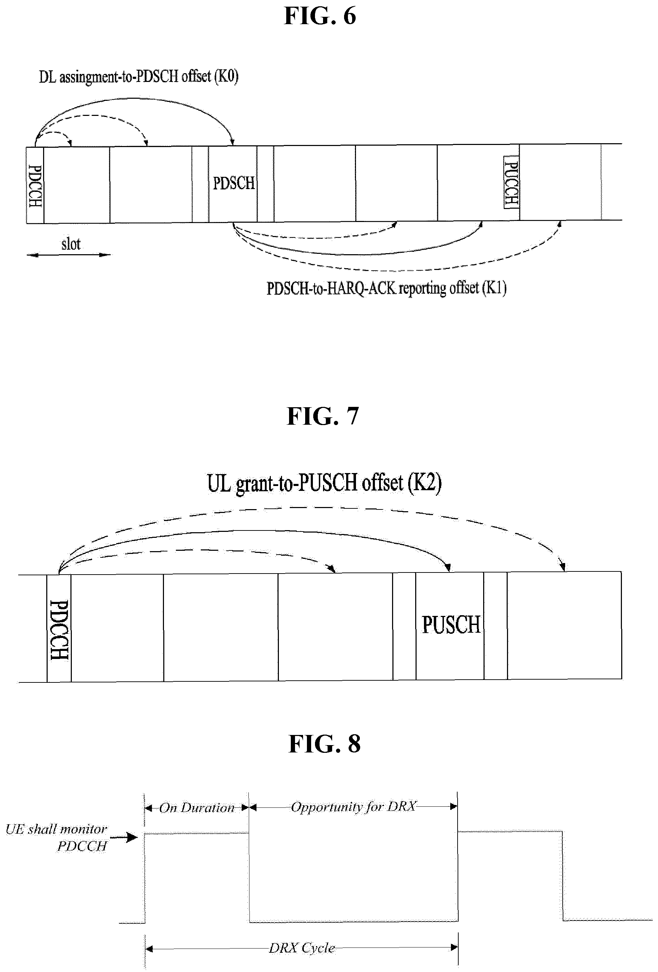

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC _IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC _INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC _INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC _INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC _INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC _INACTIVE state, the UE transitions to the RRC_IDL state and notifies the NAS of the CN-initiated paging.

A PF and a PO for paging are determined in the following manner:

- An SFN for the PF is determined by:

$$(SFN + PF\_offset) \bmod T = (T \operatorname{div} N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).

- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

|          | Type of signals                      | UE procedure                                           |
|----------|--------------------------------------|--------------------------------------------------------|
| 1st step | RRC signalling (MAC-Cell GroupConfig) | - Receive DRX configuration information                |
| 2nd Step | MAC CE ((Long) DRX command MAC CE)   | - Receive DRX command                                  |
| 3rd Step | -                                    | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC _IDLE and RRC _INACTIVE states, DRX is used to receive a paging signal discontinuously. For simplicity, DRX performed in the RRC_IDLE (or RRC_INACTIVE) state will be referred to as RRC_IDLE DRX.
Therefore, if DRX is configured, PDCCH monitoring/reception may be performed discontinuously in the time domain in performing the above-described/proposed procedures and/or methods are performed.

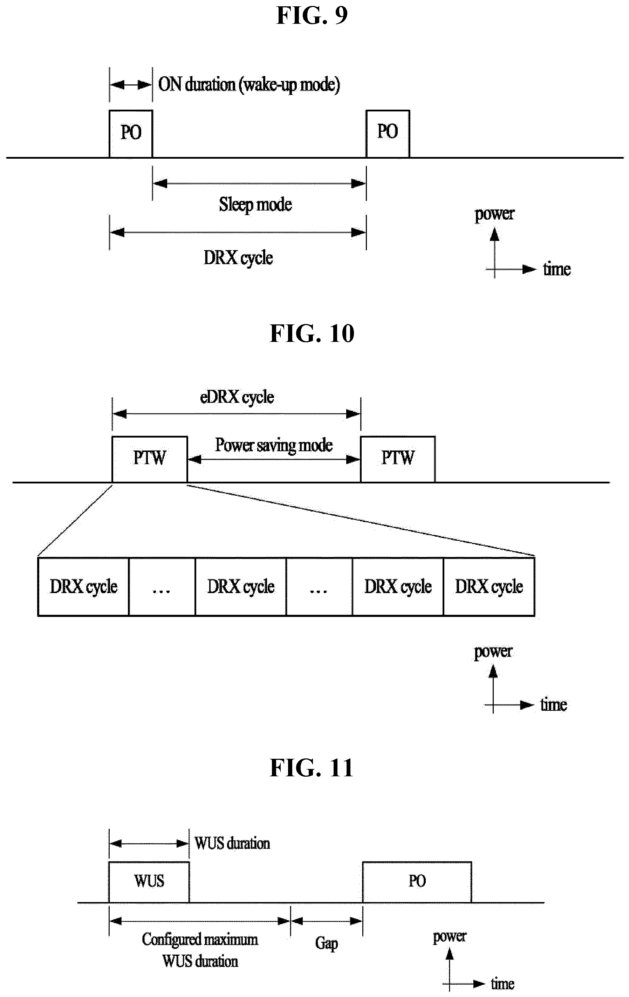

FIG. 9 illustrates an exemplary DRX cycle for paging.
Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.
In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.
FIG. 10 illustrates an extended DRX (eDRX) cycle.
According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

### WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.
FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## RRM measurement based on LP-WUR

In the Rel-18 NR standard, candidate technologies for supporting a low-power wake-up signal (LP-WUS) and low-power wake-up receiver (LP-WUR) are being discussed to reduce power consumption of the UE (FS_NR_LPWUS).

The power consumption of the UE may be determined based on a configured wake-up period, such as a paging cycle. In other words, it is important how long the UE is capable of maintaining a power-off state without activating the main radio. To meet the battery life requirement of the UE, a long eDRX cycle is expected to be configured. However, in this case, high latency is inevitable, so such a long eDRX cycle may be unsuitable for services that require low latency and long battery life. Therefore, the discussion of the LP-WUS may be about an ultra-low power mechanism that satisfies lower latency than eDRX.

A UE in the RRC Idle/Inactive state usually needs to wake up at least once every DRX cycle to receive signals, and this operation contributes significantly to power consumption during periods without signaling or data traffic. If the UE could wake up and receive signals (e.g., paging) only when triggered, rather than waking up at every DRX cycle, power consumption could be drastically reduced. This operation may be supported by triggering the main radio with a WUS and receiving the WUS with ultra-low power consumption through a separate receiver.

In the present disclosure, the main radio is referred to as MR, and the LP-WUR is referred to as LR. This follows the terminology used in the discussion of the LP-WUS.

In RAN1#110b-e, where discussions about the LP-WUS/LP-WUR began, it was agreed to introduce the 'ultra-deep sleep' power state for the MR, which represents a very low power consumption state. Although the detailed conditions for the ultra-deep sleep state have not yet been finalized, it was agreed to use a relative power of 0.015, similar to the power-off state, as the starting point for discussions (see Table 6). In this case, the relative power is a relative value where the MR in the deep sleep state is considered 1, and details thereof may be found in TR38.840.

[Table 6]

| Agreement |
|---|
| Take the following power model for main radio for evaluation in LP-WUS/WUR SI, |

- For IoT and wearable cases, reuse TR38.875 power model as baseline.
- For eMBB and other cases, reuse TR38.840 power model as baseline.
- Introduce '*Ultra-deep sleep*' power state for main radio of UEs with LP-W US receiver
  - FFS: The details of '*Ultra-deep sleep*' power state

**Agreement**

- The following power models are used '*Ultra-deep sleep*' power state for main radio for evaluation

| Power State | Relative Power (unit) | Ramp-up and down transition energy (Note1): (unit multiplied by ms) | Ramp-up time | Time for sync/re-sync |
|---|---|---|---|---|
| Ultra-deep sleep | [0.015] | [2000 ~ 40000]<br><br>- Study to converge on candidate numbers to use for evaluation<br><br>- FFS: other values and reported by companies.<br><br>- FFS: down-selection of the values,<br><br>- companies are encouraged to provide details for down-selection | [400ms], FFS: 100ms | X |

Note1:
  - Ramp-up time may consist of the procedure for [main radio hardware tune on e.g., boot, memory load and etc.],
  - Time for sync/re-sync consists of the procedure for [main radio to re-synchronization with the serving gNB etc.],
    - FFS: X and whether/how to have different values depending on other factors, e.g., signal-to-noise ratio
    - Companies can report the assumption of X in the initial evaluation.
  - Ramp up and down energy includes power for ramp-up and ramp-down. Energy consumption for sync/re-sync is separately calculated.
- The total time for main radio transition from ultra-deep sleep to active/micro sleep state is the sum of ramp-up time and time for sync/re-sync.
  - FFS whether/how to define ramp-down time, whether to separately describe the ramp-down energy consumption
Note 2: the power state transitions in this table refer to transitions between ultra deep sleep state and active / micro sleep state.

> Note 3: The values inside of '[ ]' are to be used as starting point of future study on LP-WUS

Various scenarios and candidate technologies using the LP-WUS/LP-WUR are being discussed. As explained above, the longer the MR may maintain the power-off state (or ultra-deep sleep state), the greater the power savings. A UE in the RRC Idle/Inactive state needs to regularly perform RRM measurement to handle mobility. This is typically defined to be performed at least once every DRX cycle. Therefore, if the RRM measurement requirement is maintained as it is, the MR needs to wake up at least every DRX cycle, which may not be suitable for the power savings achieved through the LP-WUS/LP-WUR.

To address this issue, RRM measurement relaxation or offloading based on the LP-WUS/LP-WUR may be considered.

Hereinafter, the present disclosure proposes RRM measurement relaxation or offloading based on the LP-WUS/LP-WUR to reduce power consumption caused by RRM measurement of the UE.

The RRM measurement relaxation may refer to increasing the period of RRM measurement that originally needs to be performed by the MR or not performing the RRM measurement for a certain period of time, similar to what was proposed in Rel-16/Rel-17. That is, the RRM measurement relaxation may involve using the LR to trigger the MR to wake up and receive signals. Accordingly, the MR may reduce the power consumption thereof compared to the original state.

The RRM measurement offloading may involve offloading some or all of the RRM measurement that should be performed by the MR to the LR. Since the LR operates at lower power than the MR, by offloading the RRM measurement of the MR to the LR, the MR may reduce the power consumption thereof compared to the original state.

For example, the present disclosure propose configurations, indications, and UE operations using the LP-WUS and/or LR to reduce the RRM measurement of the MR. In other words, the present disclosure proposes methods of reducing the number of times the UE wakes up the MR for the RRM measurement to decrease power consumption or methods of maintaining the power off (or ultra-deep sleep) state of the MR for longer periods to reduce unnecessary power consumption.

The proposed methods are described based on RRM measurement that require periodic reception, but the proposed methods are not limited thereto and may also be extended to any signals that the UE receives with a certain periodicity. Even if one of the power off and ultra-deep sleep states is described below, the two states may be similar in that in both states, the main radio does not fully receive signals, and a certain transition time is required.

The UE performs the RRM measurement for the serving cell at least once every M1*N1 DRX cycle. Generally, the RRM measurement involves measuring reference signal received power (RSRP) and reference signal received quality (RSRQ) for a specific signal (e.g., SSB) and calculating a cell selection RX level, i.e., Srxlev based on the RSRP and RSRQ. Table 7 is extracted from TS38.133.

[Table 7]

4.2.2.2 Measurement and evaluation of serving cell

The UE shall measure the SS-RSRP and SS-RSRQ level of the serving cell and evaluate the cell selection criterion S defined in TS 38.304 [1] for the serving cell at least once every M1*N1 DRX cycle; where:

M1=2 if SMTC periodicity ($T_{SMTC}$) > 20 ms and DRX cycle ≤ 0.64 second, otherwise M1=1.

The UE shall filter the SS-RSRP and SS-RSRQ measurements of the serving cell using at least 2 measurements. Within the set of measurements used for the filtering, at least two measurements shall be spaced by, at least DRX cycle/2.

If the UE has evaluated according to Table 4.2.2.2-1 in $N_{serv}$ consecutive DRX cycles that the serving cell does not fulfil the cell selection criterion S, the UE shall initiate the measurements of all neighbour cells indicated by the serving cell, regardless of the measurement rules currently limiting UE measurement activities.

If the UE in RRC_IDLE has not found any new suitable cell based on searches and measurements using the intra-frequency, inter-frequency and inter-RAT information indicated in the system information for 10 s, the UE shall initiate cell selection procedures for the selected PLMN as defined in TS 38.304 [1].

**Table 4.2.2.2-1: $N_{serv}$**

| DRX cycle length [s] | Scaling Factor (N1) | | | $N_{serv}$ [number of DRX cycles] |
|---|---|---|---|---|
| | FR1 | FR2-1 [Note1] | FR2-2 Note2 | |
| 0.32 | 1 | 8 | 12 | M1*N1*4 |
| 0.64 | | 5 | 8 | M1*N1*4 |
| 1.28 | | 4 | 6 | N1*2 |
| 2.56 | | 3 | 5 | N1*2 |

Note 1: Applies for UE supporting FR2-1 power class 2&3&4. For UE supporting FR2-1 power class 1 or 5, N1 = 8 for all DRX cycle length.

Note 2: Applies for UE supporting FR2-2 power class 2&3. For UE supporting FR2-2 power class 1, N1 = 12 for all DRX cycle length.

For the convenience of explanation, it is assumed that the DRX cycle is greater than 0.64 seconds, the (SSB-based measurement timing configuration) SMTC periodicity is less than 20 ms, and the frequency range is FR1 (M1=1, N1=1). Under these assumptions, the UE may be said to perform the RRM measurement every DRX cycle.

The present disclosure explains with an example where the RRM measurement is performed every DRX cycle, but the proposed methods are not limited to specifying the period of the RRM measurement unless further explanation is provided. For example, the proposed methods are not limited to the operation of performing the RRM measurement every DRX cycle and may also be applied to the operation of performing the RRM measurement every N1*M1*DRX cycle. The application of the proposed methods is not limited to NR or DRX UEs.

In the following explanation, the distinction between individual methods or options is intended to clarify the description and should not be interpreted as a limitation that each needs to be implemented independently. For example, the methods/options described below may be implemented individually, but within the scope that does not conflict with each other, at least some of the methods/options may be implemented in combination.

**[Proposal 1]**

For example, a trigger for waking up the MR may be determined based on RRM measurement based on the LP-WUR.

To allow the power-consuming MR to perform RRM measurement at a longer period than the original period or to maintain the power off or ultra-deep sleep state for a certain period of time, it is proposed to trigger the MR by receiving signals through the LR and performing the measurement.

A. Basic UE operation

The UE performs the RRM measurement for the serving cell using the MR at least once every M1*N1 DRX cycle. In the example of the present disclosure, a simple case with M1=1 and N1=1 is assumed.

The UE may determine whether to trigger the wake-up of the MR based on the measurement results based on the LR. The RRM measurement based on the LR may also be required to be performed at least once every predetermined measurement period (DRX cycle), similar to the RRM measurement based on the MR.

B. RRM measurement period of LR

The measurement based on the LR may be configured to be performed at least once every DRX cycle, similar to the measurement based on the MR. The DRX cycle of the LR and corresponding UE operations may be configured in various forms.

1) DRX cycle of LR = DRX cycle of MR

The UE may always perform the measurement based on the LR whenever performing the RRM measurement using the MR. Therefore, the UE may determine whether to trigger the wake-up of the MR based on the measurement results based on the LR.

2) DRX cycle of LR > DRX cycle of MR

When the UE performs the RRM measurement by receiving the LP-WUS through the LR, the LP-WUS may correspond to multiple paging occasions (POs) or durations. Alternatively, when the LR performs the RRM measurement using a separate RS, the transmission interval of the RS may be longer than that for waking up the MR. In such cases, the result of the RRM measurement using the LR may not be available every MR DRX cycle, or the result may be available after a long time has passed. In other words, the result of the RRM measurement using the LR is used to determine whether to trigger the wake-up of the MR, and in the next DRX cycle of the MR, no new RRM measurement results using the LR are available. In such cases, whether the UE needs to turn on the MR to perform the RRM measurement may be indicated via a separate wake-up indication, or the UE operation in this situation may be preconfigured/indicated through a higher layer configuration.

3) DRX cycle of LR < DRX cycle of MR

This may be to increase increasing the reception reliability of the LP-RS and improve the scheduling opportunities of the BS. In other words, the RRM measurement using the LR may be performed at least once before the RRM measurement using the MR is performed once. In this case, the next wake-up trigger of the MR may be determined by the average of the previous RRM measurement results using LR. Alternatively, the MR could be triggered to wake up if all the results exceed a threshold, or if at least one of the results exceeds the threshold. This operation may be predefined or configured/indicated through a higher layer configuration.

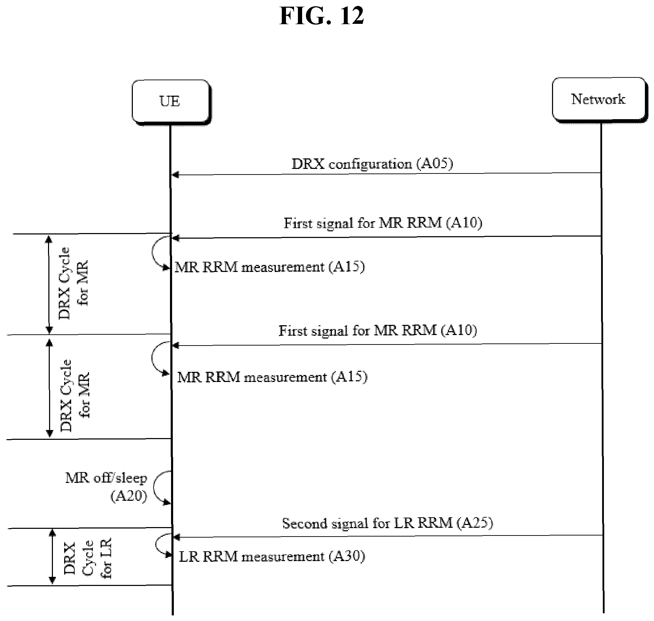

FIG. 12 is a diagram for explaining a DRX configuration and RRM measurement according to an embodiment. Referring to FIG. 12, a UE may receive the DRX configuration through higher layer signaling from a network (A05). The DRX configuration may include at least one of a first DRX configuration, which contains information about a first DRX cycle for the LP-WUR, and a second DRX configuration, which contains information about a second DRX cycle for the MR of the UE.

When the MR is on, the UE may operate according to the second DRX configuration. The UE may perform the RRM measurement through the MR at least once every M second DRX cycles (where M is an integer greater than or equal to 1) (A15).

The UE may turn off/sleep the MR (A20) and operate according to the first DRX configuration. The UE may perform the RRM measurement through the LR at least once every N first DRX cycles (where N is an integer greater than or equal to 1) (A30). For example, the first DRX cycle may be set to be smaller than the second DRX cycle. For example, a first signal for RRM of the MR and a second signal for RRM of the LR may be different from each other.

4) When RRM measurement relaxation is applied

The RRM measurement relaxation may be applied when a UE with low mobility is not located at the cell edge in Rel-16 and to stationary UEs in Rel-17. When the UE performs the RRM measurement using the LR, the RRM measurement of the MR may be configured to be relaxed. For example, if the UE performs the RRM measurement using the LR, the RRM measurement of the MR may be performed at least once every N*DRX cycles, rather than every DRX cycle, or measurement for neighbor cells may not be performed at all for a certain period of time.

C. Signal targeted for RRM measurement based on LR

The signal targeted for RRM measurement based on the LR is referred to as a low power reference signal (LP-RS). The LP-RS may include the following types of signals.

1) Additional synchronization signal or dedicated RS for LP-WUR (e.g., beacon signal or LP synchronization signal)

Such a signal may be a signal specifically designed for reception by the LR. The signal may be an additional signal for synchronization of the LP-WUS/LP-WUR or an RS specifically designed for the LR. In this case, the signal may need to be transmitted at regular intervals. Since the number of signals that need to be always transmitted additionally within the current bandwidth of the UE increases, other transmissions may be affected. Therefore, these factors should be considered when designing the signal.

2) LP-WUS

RRM measurement may be performed based on an LP-WUS, which includes the wake-up indication of the MR and may be received by the LR. The LP-WUS may consist of a preamble (sequence) for synchronization and a message. Therefore, similar to measuring SS-RSRP/SS-RSRQ, measurement results (e.g., LP-RSRP/LP-RSRQ) may be derived based on the preamble of the LP-WUS. Depending on the transmission interval and method of the LP-WUS, it may be difficult to obtain RRM measurement results smoothly. If the LP-WUS is transmitted intermittently, the UE needs to receive the LP-WUS via blind detection. As a result, from the perspective of the UE, it may be difficult to derive the RRM measurement results.

3) SSB

The SSB, which is the existing signal for RRM measurement based on the MR, may be measured by the LR. In this case, if the UE is capable of operating the LR, the UE may determine whether to perform the RRM measurement for the SSB using the LR or MR. The determination may be based on whether the UE requires higher accuracy or greater power saving for the current RRM measurement. For example, if the UE is determined to be in low mobility or relatively close to the cell center, the UE may prioritize power saving over measurement accuracy and determine to perform the RRM measurement using the LR.

Alternatively, each UE may be provided with the configuration/indication through higher layer signaling, depending on the receiver supported by each UE. For example, some UEs may be able to perform the RRM measurement for the SSB via the LR, while other UEs may be able to perform the RRM measurement for the SSB through the MR other than the LR. In this case, for the UEs that may only perform the measurement through the MR other than the LR, additional relaxation for power saving may be considered. In other words, the UEs that may perform the RRM measurement for the SSB via the LR need to perform the RRM requirement at least once every DRX cycle using the LR or MR. However, the UEs that may only perform the measurement through the MR may be configured to perform the RRM measurement for the SSB at least once every N*DRX cycles, rather than every DRX cycle. During a period therebetween, measurement for other signals using the LR may need to be performed as a supplementary operation. If the power consumption of the LR is relatively close to zero (ultra-low), the power consumption may be almost negligible, which may have a similar effect to the RRM measurement relaxation of the MR.

D. MR wake-up triggering

The UE may compare an RRM measurement result based on the LR with a threshold to determine whether to trigger the wake-up of the MR. In other words, the UE may derive Srxlev based on the RRM measurement using LR (e.g.,

LP-RSRP and LP-RSRQ). If the value is greater than a specific threshold, the UE may ignore the requirement to perform the RRM measurement using the MR at least once in the current DRX cycle. That is, the UE may not perform the RRM measurement using the MR.

When the LP-RS is not a signal that is always transmitted periodically, for example, when the RRM measurement is performed via the LP-WUS, it may be configured to trigger the wake-up of the MR if the RRM measurement using the LR fails a certain number of times. If the RRM measurement using the LR fails, the UE may not obtain useful RRM measurement results related to triggering of the wake-up of the MR, so the UE may preferably perform additional measurement. Then, if the UE performs the RRM measurement several times but does not obtain results, the UE may trigger the MR to wake up and perform the RRM measurement using the MR.

Before performing the RRM measurement using the MR, that is, before a time point at which a signal (SSB) for the RRM measurement is available in the DRX cycle of the MR, there may be a wake-up trigger based on RRM measurement results based on the LR and a wake-up indication through the LP-WUS. If both the trigger and indication are "no wake-up," the UE may not perform the RRM measurement using the MR for the DRX cycle. In other words, during the DRX cycle, the UE may not be required to perform the RRM measurement using the MR.

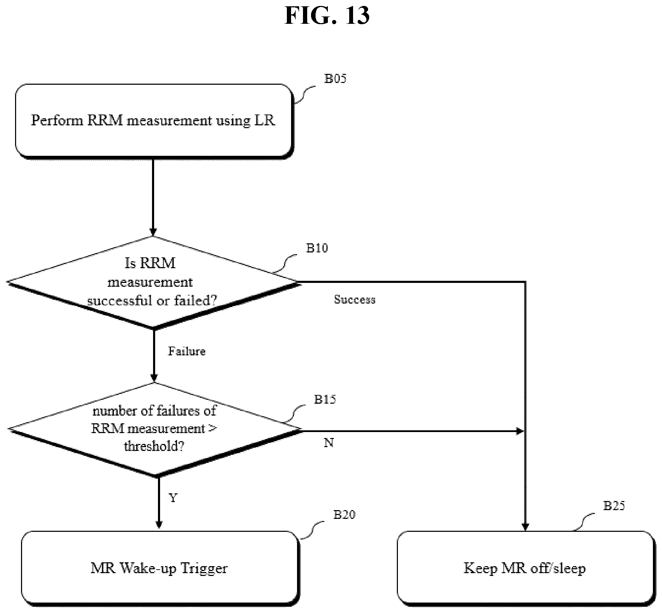

FIG. 13 is a diagram for explaining an MR wake-up trigger according to an embodiment. Referring to FIG. 13, the UE may perform RRM measurement through the LR (B05). Proposal 1 described above may be applied for the RRM measurement based on the LR. The UE may determine whether the RRM measurement is successful or fails (B10). The success/failure of the measurement may be determined based on various rule configurations, such as the accuracy of the RRM measurement. If the RRM measurement is successful, the UE may maintain the MR in the off/sleep state (B25). If the RRM measurement fails, the UE may determine whether the number of RRM measurement failures of the LR exceeds a threshold (B15). If the number of RRM measurement failures of the LR exceeds the threshold, the UE may wake up the MR. For example, the UE may operate a counter that accumulates the number of RRM measurement failures of the LR. If the counter value exceeds the threshold, the UE may wake up the MR. For example, if the RRM measurement of the LR is successful, the counter may be reset. For example, the threshold may be configured through network signaling. The number of RRM measurement failures compared to the threshold may be the number of consecutive RRM measurement failures.

E. Transmission of signal targeted for RRM measurement through LR

In the case of the LP-RS described above, the additional synchronization signal or dedicated RS for the LP-WUR as well as the LP-WUS, excluding the SSB, may be transmitted additionally within the bandwidth of the UE. Therefore, it may be preferable to determine the transmission period and timing of the LP-RS in consideration of the existing RRM measurement period and timing using the MR.

1) Additional synchronization signal or dedicated RS for LP-WUR (e.g., beacon signal or LP synchronization signal)

The LP-RS may be transmitted based on the DRX cycle of the MR of the UE. For example, the LP-RS may be transmitted at least once during the DRX cycle of the MR. If the UE intends to reduce power consumption, the UE may consider the wake-up time of the MR in the DRX cycle after the RRM measurement based on the LP-RS. The UE may perform the RRM measurement based on the MR only if there is a wake-up trigger based on the RRM measurement results based on the LP-RS.

In this case, the transmission of the LP-RS may be considered to be performed a certain time (e.g., 400ms) or a certain slot before a time point when the UE desires to wake up the MR to perform the RRM measurement. This may take into account a transition time required to wake up the MR as shown in Table 1.

When the LP-RS is transmitted, the UE may receive or not receive the LP-RS via the LR. This may be configured/indicated by higher layer configurations or determined depending on the capability of the UE. In other words, the UE may report the capability to receive the LP-RS via the LR and determine whether to receive the LP-RS through the LR based on the capability.

2) LP-WUS

The LP-WUS may consist of a preamble (sequence) for synchronization and a message containing a wake-up indication. The LP-WUS may be transmitted at specific intervals within a certain period of time, similar to a WUS in the connected mode (DCI format 2_6). Therefore, the UE may perform the RRM measurement using the LR and receive the LP-WUS according to the intervals. If the LP-WUS is transmitted intermittently, the UE may be required to perform blind detection a certain number of times.

Alternatively, the LP-WUS may be transmitted based on the request from the UE (on-demand). This may be to determine the wake-up trigger of the MR in specific conditions, such as at the cell edge or with high mobility. In this case, the LP-WUS may need to be transmitted considering the transition time required to wake up the MR.

[Proposal 2]

For example, the RRM measurement through the LP-WUR may (partially) replace SSB-based RRM measurement of the MR.

The UE may choose to perform the RRM measurement for quality evaluation of the serving cell using either the LR or MR. In this case, the RRM measurement using the LR may involve the LP-RS described in Proposal 1, which may be the additional synchronization signal or dedicated RS, LP-WUS, or SSB.

The UE performs the RRM measurement at least once every DRX cycle using either the LR or MR. In other words, if the UE performs the measurement once to evaluate the quality of the serving cell by selecting either the MR or LR within a predetermined evaluation period, it may be said that the RRM measurement requirement is satisfied.

Similar to the typical cell re-selection procedure through RRM measurement, if the UE determines that the cell quality is insufficient based on the RRM measurement results using the LR, the UE may perform the cell re-selection procedure. In this case, depending on which LP-RS the UE uses for the RRM measurement through the LR, the threshold for determining the cell quality may vary or remain the same.

When the RRM measurement using the LR is not performed for a certain period of time, such as N*DRX cycles, the UE may be required to wake up the MR and perform the RRM measurement even if there is no wake-up indication in the LP-WUS.

Therefore, when the UE is configured with such an operation, the UE may be required to perform the RRM measurement using either the LR or MR at least once every DRX cycle. Generally, the UE may avoid performing the RRM measurement using the MR for as long as possible to save power. However, to prevent the UE from performing the RRM measurement using the MR for a significantly long period, the UE may be required to perform the RRM measurement using the MR at least once every certain period of time. The certain period of time may be a fixed period of time, such as one hour, or it may be defined as a multiple of the DRX cycle, such as N*DRX cycles. In addition, it may be defined in various other forms. The requirement for performing the RRM measurement using the MR at least once every certain period of time is not necessarily mandatory for the UE, and it may be configured/indicated based on the capability of the UE or through higher layer signaling.

[Proposal 3]

For example, the UE may perform the RRM measurement for the serving cell and neighbor cells by dividing the measurement between the MR and LR.

The UE may perform the RRM measurement using the LR based on the DRX cycle during which the serving cell needs to be measured. In this case, a signal targeted for the RRM measurement using the LR may be the LP-RS described in Proposal 1.

The UE may perform the RRM measurement using the LR on the LP-RS and use the results to assess the quality of the serving cell. If the RRM measurement using the MR is not performed for a certain period of time (e.g., N*DRX cycles or a fixed time such as one hour), the UE may perform the RRM measurement using the MR to assess the quality of the serving cell even without a wake-up indication from the LP-WUS. This is to prevent the UE from performing the RRM measurement using the MR for a significantly long period.

If the UE determines that the quality of the serving cell is poor based on an RRM measurement result using the LR, the UE may initiate the cell re-selection procedure and start the RRM measurement for a neighbor cell. To this end, if the RRM measurement result based on the LR is smaller than a certain threshold, the wake-up of the MR is triggered. The UE uses the MR to perform the RRM measurement for the neighbor cell and proceed with the cell re-selection.

When the UE is configured with the above operation, if the MR is triggered via a wake-up indication from the LP-WUS, the UE may perform the RRM measurement using the MR after a certain period of time passes from the previous serving cell measurement.

For example, if the UE performs no RRM measurement for the current DRX cycle and the MR is triggered due to the previous wake-up indication, the UE may perform the RRM measurement using the MR.

Alternatively, if N*DRX cycles or M time (where M is a real number) passes from the previous RRM measurement using the MR and the MR is triggered due to the previous wake-up indication, the UE may perform the RRM measurement using the MR.

When the MR is triggered via the wake-up indication from the LP-WUS, even if the serving cell quality is good, the UE may perform measurement for the neighbor cell using the MR.

[Proposal 4]

For example, the RRM measurement using the LR may be used to determine whether relaxed measurement needs to be applied.

The RRM measurement using the LR proposed in Proposal 1 and Proposal 2 may be used in the same way to determine the conditions for applying the relaxed measurement, such as whether the UE has low mobility or is not at the cell edge. In other words, the UE may compare the RRM measurement results, which are obtained by receiving the LP-RS through the LR proposed in Proposal 1 and Proposal 2, with thresholds for determining whether the UE has low mobility and at the cell edge. If it is determined that the UE does not have low mobility or is not at the cell edge, that is, if the relaxed measurement is not applied, the wake-up of the MR may be triggered.

In the case of the cell edge, the coverage of the LR may be insufficient compared to that of the MR, or even if the coverage of the LR is similar to that of the MR, the wake-up of the MR may be triggered for higher measurement accuracy or for neighbor cell measurement.

In the case of non-low mobility, the wake-up of the MR may be triggered for higher accuracy or for neighbor cell measurement. If the UE does not have low mobility, it may be assumed that the UE is in a fast-moving state. The wake-up of the MR may be triggered to perform MR-based measurement in order to prioritize handling handover and quickly connecting to another cell.

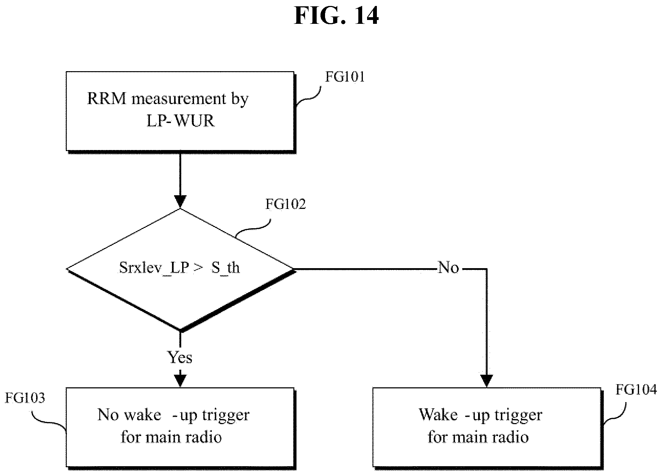

FIG. 14 illustrates an example of UE operations according to Proposal 1.

Referring to FIG. 14, the UE performs RRM measurement using an LR according to requirements (FG101). A signal for the RRM measurement using the LR may be an LP-RS. Based on an RRM measurement result, the UE may determine whether to trigger the wake-up of an MR (FG102). The RRM measurement result using the LR (Srxlev_LP) may be compared with a threshold (S_th) for triggering the MR. If the RRM measurement result using LR is more than or equal to the threshold, the MR is not woke up (FG103). This means that the UE does not need to perform RRM measurement using the MR for a corresponding DRX cycle. If the RRM measurement result using the LR is less than or equal to the threshold, the MR is woke up (FG104). In this case, the RRM measurement using the MR may be measurement for the quality of a serving cell or measurement for a neighbor cell.

The proposed methods have been described based on the following UE structures: the LP-WUR of the UE, the RRM measurement based on the MR, and the LP-WUS transmission/reception. The application of the proposed methods is not limited to a specific type of UE. Furthermore, the proposed methods may be applied to various RRM measurement operations.

According to the above proposals, the UE may use the LP-WUR to (partially) replace or extend the period of the existing RRM measurement performed by the MR, thereby significantly reducing the resulting power consumption.

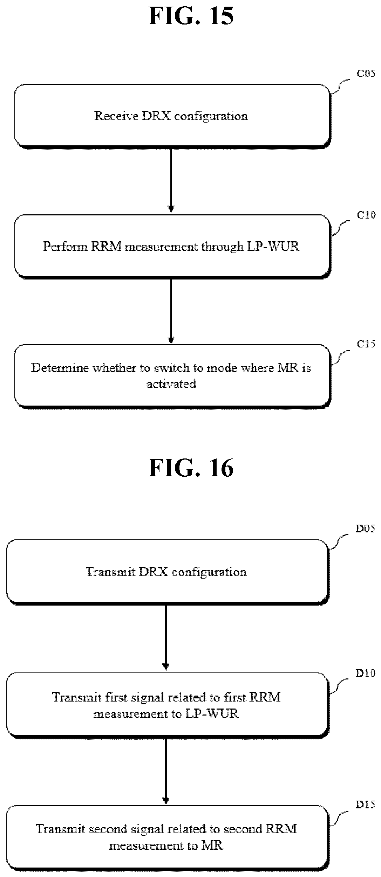

FIG. 15 is a diagram for explaining a signal reception method for a UE according to an embodiment.

Referring to FIG. 15, the UE may receive a DRX configuration from a network, which includes information about a first DRX cycle for an LP-WUR of the UE (C05). The first DRX cycle for the LP-WUR may be configured differently from a second DRX cycle for an MR. The first DRX cycle may be smaller than the second DRX cycle.

The UE may perform RRM measurement through the LP-WUR in a first mode based on the first DRX cycle, in which the MR is deactivated (C10).

The UE may determine, based on results of the RRM measurement, whether to switch to a second mode in which the MR is activated (C15). The UE may determine to switch to the second mode based on that the number of failures of the RRM measurement through the LP-WUR in the first mode exceeds a threshold.

A first RRM measurement period for the LP-WUR in the first mode may be determined based on the first DRX cycle, and a second RRM measurement period for the MR in the second mode may be determined based on the second DRX cycle. The first RRM measurement period may be smaller than the second RRM measurement period.

The first mode may be maintained until the number of the failures of the RRM measurement reaches the threshold.

The MR may be turned off or enter a sleep state in the first mode.

Based on that the number of the failures of the RRM measurement exceeds the threshold, the UE may switch to the second mode before a timing in whcih a signal for the RRM measurement of the MR is provided.

After switching to the second mode, the RRM measurement of the MR may be performed at integer multiples of the second DRX cycle.

The RRM measurement may be performed based on an LP-WUR synchronization signal or an LP-WUR RS provided for the LP-WUR.

The MR may be related to OFDMA in 3GPP-NR.

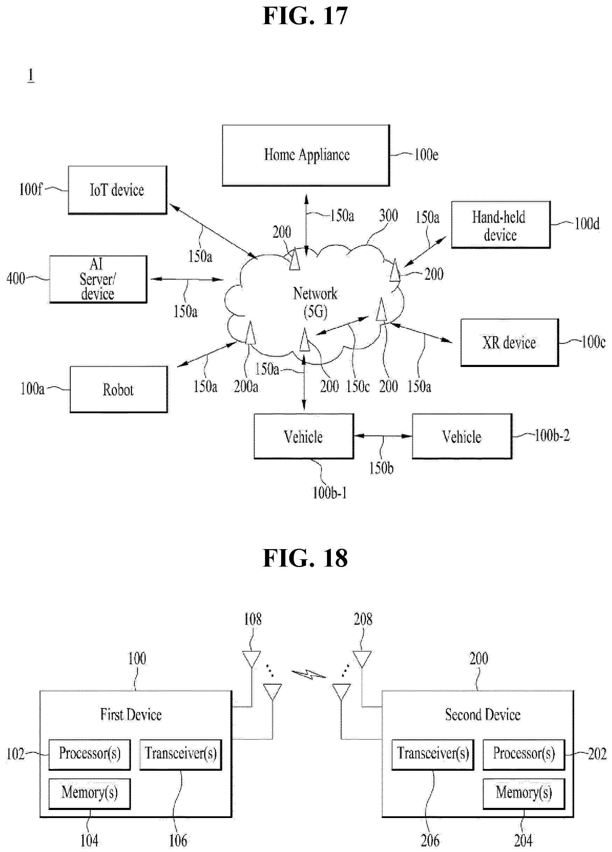

The UE may include a first receiver for the MR and a second receiver for the LP-WUR. For example, a first device 100 in FIG. 18 may operate as the UE, and a transceiver 106 may include the first receiver (not shown) for the MR and the second receiver (not shown) for the LP-WUR. Additionally, the transceiver 106 may include a second transmitter (not shown) for the MR. The transceiver 106 may further include a second transmitter (not shown) for the LP-WUR.

FIG. 16 is a diagram for explaining a signal transmission method for a BS according to an embodiment.

Referring to FIG. 16, the BS may transmit a first DRX configuration including information about a first DRX cycle for an LP-WUR of a UE and a second DRX configuration including information about a second DRX cycle for an MR of the UE (D05).

The BS may transmit a first signal related to first RRM measurement to the LP-WUR of the UE in a first mode, where the MR of the UE is deactivated (D10).

The BS may transmit a second signal related to second RRM measurement to the MR of the UE in a second mode, where the MR of the UE is activated (D15).

The first DRX cycle for the LP-WUR may be related to the first RRM measurement, and the second DRX cycle for the MR may be related to the second RRM measurement. The first DRX cycle may be set to be smaller than the second DRX cycle.

A first RRM measurement period for the LP-WUR may be determined based on the first DRX cycle, and a second RRM measurement period for the MR may be determined based on the second DRX cycle. The first RRM measurement period may be smaller than the second RRM measurement period.

The first RRM measurement may be performed based on an LP-WUR synchronization signal or an LP-WUR RS provided for the LP-WUR.

The MR may be related to OFDMA in 3GPP-NR.

The BS may include a first transmitter for the MR and a second transmitter for the LP-WUR. For example, a second device 200 in FIG. 18 may operate as the BS, and a transceiver 206 may include the second transmitter (not shown) for the MR and the second transmitter (not shown) for the LP-WUR. Additionally, the transceiver 206 may include a second transmitter (not shown) for the MR. The transceiver 206 may further include a second transmitter (not shown) for the LP-WUR.

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

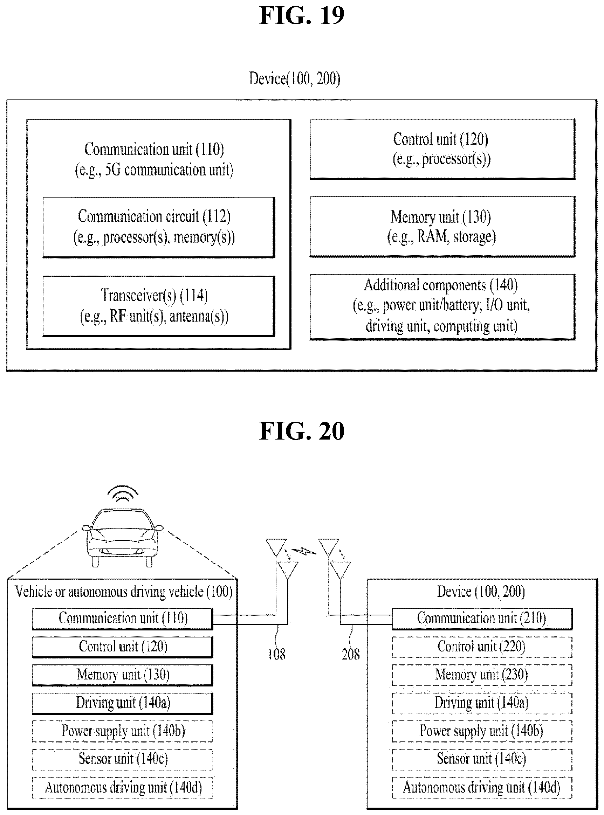

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure is applicable to UEs, BSs, or other apparatuses in a wireless mobile communication system.

**Claims**

1.   A method of receiving a signal by a user equipment (UE) in a wireless communication system, the method comprising:

receiving, from a network, a discontinuous reception (DRX) configuration including information about a first DRX cycle for a low-power wake-up radio (LP-WUR) of the UE;
performing radio resource management (RRM) measurement through the LP-WUR based on the first DRX cycle in a first mode in which a main radio (MR) of the UE is deactivated; and
determining, based on results of the RRM measurement, whether to switch to a second mode in which the MR is activated,
wherein the first DRX cycle for the LP-WUR is configured differently from a second DRX cycle for the MR, and
wherein the UE determines to switch to the second mode based on that a number of failures of the RRM measurement through the LP-WUR in the first mode exceeds a threshold.

2.   The method of claim 1, wherein the first DRX cycle is smaller than the second DRX cycle.

3.   The method of claim 1, wherein a first RRM measurement period for the LP-WUR in the first mode is determined based on the first DRX cycle,

wherein a second RRM measurement period for the MR in the second mode is determined based on the second DRX cycle, and
wherein the first RRM measurement period is smaller than the second RRM measurement period.

4.   The method of claim 1, wherein the first mode is maintained until the number of the failures of the RRM measurement reaches the threshold.

5.   The method of claim 1, wherein the MR is turned off or enters a sleep state in the first mode.

6.   The method of claim 1, wherein based on that the number of the failures of the RRM measurement exceeds the threshold, the UE switches to the second mode before a timing in whcih a signal for the RRM measurement of the MR is provided.

7.   The method of claim 1, wherein after switching to the second mode, the RRM measurement of the MR is performed at integer multiples of the second DRX cycle.

8.   The method of claim 1, wherein the RRM measurement is performed based on an LP-WUR synchronization signal or an LP-WUR reference signal provided for the LP-WUR.

9.   The method of claim 1, wherein the MR is related to orthogonal frequency division multiple access (OFDMA) in 3rd Generation Partnership Project New Radio (3GPP-NR).

10.  A computer-readable recording medium having recorded thereon a program for executing the method of claim 1.

11.  A device for wireless communication, the device comprising:

a memory configured to store instructions; and
a processor configured to perform operations by executing the instructions,
wherein the operations of the processor comprise:

receiving, from a network, a discontinuous reception (DRX) configuration including information about a first DRX cycle for a low-power wake-up radio (LP-WUR) of the device;
performing radio resource management (RRM) measurement through the LP-WUR based on the first DRX cycle in a first mode in which a main radio (MR) of the device is deactivated; and
determining, based on results of the RRM measurement, whether to switch to a second mode in which the MR is activated,
wherein the first DRX cycle for the LP-WUR is configured differently from a second DRX cycle for the MR, and
wherein the processor is configured to determine to switch to the second mode based on that a number of failures of the RRM measurement through the LP-WUR in the first mode exceeds a threshold.

12. The device of claim 11, further comprising:

a first receiver for the MR; and
a second receiver for the LP-WUR.

13. The device of claim 11, wherein the device is a user equipment (UE) operating in a wireless communication system or a processing device configured to control the UE.

14. A method of transmitting a signal by a base station (BS) in a wireless communication system, the method comprising:

transmitting a first discontinuous reception (DRX) configuration including information about a first DRX cycle for a low-power wake-up radio (LP-WUR) of a user equipment (UE) and a second DRX configuration including information about a second DRX cycle for a main radio (MR) of the UE;
transmitting a first signal related to first radio resource management (RRM) measurement to the LP-WUR of the UE in a first mode in which the MR of the UE is deactivated; and
transmitting a second signal related to second RRM measurement to the MR of the UE in a second mode in which the MR of the UE is activated,
wherein the first DRX cycle for the LP-WUR is related to the first RRM measurement,
wherein the second DRX cycle for the MR is related to the second RRM measurement, and
wherein the first DRX cycle is set to be smaller than the second DRX cycle.

15. A base station (BS) for wireless communication, the BS comprising:

a memory configured to store instructions; and
a processor configured to perform operations by executing the instructions,
wherein the operations of the processor comprise:

transmitting a first discontinuous reception (DRX) configuration including information about a first DRX cycle for a low-power wake-up radio (LP-WUR) of a user equipment (UE) and a second DRX configuration including information about a second DRX cycle for a main radio (MR) of the UE;
transmitting a first signal related to first radio resource management (RRM) measurement to the LP-WUR of the UE in a first mode in which the MR of the UE is deactivated; and
transmitting a second signal related to second RRM measurement to the MR of the UE in a second mode in which the MR of the UE is activated,
wherein the first DRX cycle for the LP-WUR is related to the first RRM measurement,
wherein the second DRX cycle for the MR is related to the second RRM measurement, and
wherein the first DRX cycle is set to be smaller than the second DRX cycle.

# FIG. 1

Initial Cell Search

System Information Reception

Random Access Procedure

General DL/UL Tx/Rx
S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101      S102      S103   S104      S105    S106      S107

- DL/UL ACK/NACK
- UE CQI/PMI/Rank Report using PUSCH and PUCCH

# FIG. 2

...... One Frame (10ms) ......

...... Half-Frame (5ms)    Half-Frame (5ms) ......

...... Subframe 0 (1ms) ...... Subframe 4 (1ms)   Subframe 5 (1ms) ...... Subframe 9 (1ms) ......

Subframe (1ms)

15KHz | Slot (14 symbols) |
1ms

30KHz | Slot 0 (14 symbols) | Slot 1 |
500us

60KHz | Slot 0 (14 symbols) | Slot 1 | Slot 2 | Slot 3 |
250us

120KHz | Slot 0 (14 symbols) | Slot 1 | Slot 2 | Slot 3 | Slot 4 | Slot 5 | Slot 6 | Slot 7 |
125us

# FIG. 3

# FIG. 4

Long PUSCH

PDCCH

Gap

PDSCH/PUSCH

Short PUCCH

Long PUSCH

One slot

f

t

# FIG. 5

UE

BS

CORESET configuration     S502

SS configuration     S504

PDCCH generation     S506

PDCCH candidate monitoring in the configured SS     S508

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

On Duration — Opportunity for DRX

UE shall monitor PDCCH

DRX Cycle

# FIG. 9

ON duration (wake-up mode)

PO

PO

Sleep mode

DRX cycle

power

time

# FIG. 10

eDRX cycle

PTW

Power saving mode

PTW

| DRX cycle | ... | DRX cycle | ... | DRX cycle | DRX cycle |

power

time

# FIG. 11

WUS duration

WUS

PO

Configured maximum
WUS duration

Gap

power

time

# FIG. 12

# FIG. 13

```
Perform RRM measurement using LR        B05

                    │
                    ▼
            Is RRM
          measurement              B10
       successful or failed?    ──────── Success ─────────┐
                    │                                     │
                  Failure                                 │
                    │                                     │
                    ▼                                     │
          number of failures of      B15                  │
          RRM measurement >  ──────── N ──────────┐       │
              threshold?                           │      │
                    │                              │      │
                    Y                              │      │
                    ▼                              ▼      ▼
           MR Wake-up Trigger   B20          Keep MR off/sleep   B25
```

# FIG. 14

RRM measurement by
LP-WUR — FG101

Srxlev_LP > S_th — FG102

Yes

No

FG103 — No wake -up trigger
for main radio

Wake -up trigger
for main radio — FG104

# FIG. 15

Receive DRX configuration — C05

Perform RRM measurement through LP-WUR — C10

Determine whether to switch to mode where MR is activated — C15

# FIG. 16

Transmit DRX configuration — D05

Transmit first signal related to first RRM measurement to LP-WUR — D10

Transmit second signal related to second RRM measurement to MR — D15

# FIG. 17

# FIG. 18

# FIG. 19

Device(100, 200)

| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 20

| Vehicle or autonomous driving vehicle (100) | Device (100, 200) |
| Communication unit (110) | Communication unit (210) |
| Control unit (120) | Control unit (220) |
| Memory unit (130) | Memory unit (230) |
| Driving unit (140a) | Driving unit (140a) |
| Power supply unit (140b) | Power supply unit (140b) |
| Sensor unit (140c) | Sensor unit (140c) |
| Autonomous driving unit (140d) | Autonomous driving unit (140d) |

108          208

# INTERNATIONAL SEARCH REPORT

International application No.

**PCT/KR2023/016958**

## A. CLASSIFICATION OF SUBJECT MATTER

**H04W 52/02**(2009.01)i; **H04W 24/08**(2009.01)i; **H04W 76/28**(2018.01)i

According to International Patent Classification (IPC) or to both national classification and IPC

## B. FIELDS SEARCHED

Minimum documentation searched (classification system followed by classification symbols)

H04W 52/02(2009.01); H04W 24/02(2009.01); H04W 24/10(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LP-WUR, DRX 사이클(DRX cycle), DRX 설정(DRX configuration), MR, 비활성화 (inactivation), RRM, 활성화(activation), 임계치(threshold)

## C. DOCUMENTS CONSIDERED TO BE RELEVANT

| Category* | Citation of document, with indication, where appropriate, of the relevant passages | Relevant to claim No. |
|---|---|---|
| A | EP 3962177 A1 (GUANGDONG OPPO MOBILE TELECOMMUNICATIONS CORP., LTD.) 02 March 2022 (2022-03-02)<br>See paragraphs [0051]-[0103]; claim 1; and figure 3. | 1-15 |
| A | CN 111246503 A (ZHANXUN SEMICONDUCTOR (NANJING) CO., LTD.) 05 June 2020 (2020-06-05)<br>See claim 1. | 1-15 |
| A | US 2022-0150830 A1 (TELEFONAKTIEBOLAGET LM ERICSSON (PUBL)) 12 May 2022 (2022-05-12)<br>See paragraphs [0055]-[0132]; and figures 3-4. | 1-15 |
| A | WO 2022-010567 A1 (QUALCOMM INCORPORATED) 13 January 2022 (2022-01-13)<br>See paragraphs [0080]-[0100]; and figures 6-8. | 1-15 |
| A | WO 2017-012540 A1 (MEDIATEK INC.) 26 January 2017 (2017-01-26)<br>See paragraph [0035]; and figure 6. | 1-15 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016958**

| Patent document cited in search report | | | Publication date (day/month/year) | Patent family member(s) | | | Publication date (day/month/year) |
|---|---|---|---|---|---|---|---|
| EP | 3962177 | A1 | 02 March 2022 | CN | 113545135 | A | 22 October 2021 |
| | | | | CN | 113873628 | A | 31 December 2021 |
| | | | | CN | 113873628 | B | 18 April 2023 |
| | | | | EP | 3962177 | A4 | 11 May 2022 |
| | | | | EP | 3962177 | B1 | 15 February 2023 |
| | | | | US | 2022-0104134 | A1 | 31 March 2022 |
| | | | | WO | 2021-056136 | A1 | 01 April 2021 |
| CN | 111246503 | A | 05 June 2020 | CN | 111246503 | B | 14 March 2023 |
| | | | | WO | 2021-139820 | A1 | 15 July 2021 |
| US | 2022-0150830 | A1 | 12 May 2022 | EP | 3689040 | A1 | 05 August 2020 |
| | | | | EP | 3689040 | B1 | 27 April 2022 |
| | | | | EP | 4037387 | A1 | 03 August 2022 |
| | | | | US | 11240756 | B2 | 01 February 2022 |
| | | | | US | 2020-0196242 | A1 | 18 June 2020 |
| | | | | WO | 2019-063336 | A1 | 04 April 2019 |
| WO | 2022-010567 | A1 | 13 January 2022 | US | 2023-0239794 | A1 | 27 July 2023 |
| WO | 2017-012540 | A1 | 26 January 2017 | BR | 112017027764 | A2 | 11 September 2018 |
| | | | | CN | 107852631 | A | 27 March 2018 |
| | | | | EP | 3298818 | A1 | 28 March 2018 |
| | | | | US | 2017-0026861 | A1 | 26 January 2017 |

Form PCT/ISA/210 (patent family annex) (July 2022)